# EUROPEAN PATENT APPLICATION

(11) **EP 1 770 489 A2**
(43) Date of publication of application: **04.04.2007**
(21) Application number: 06014283.3
(22) Date of filing: 10.07.2006
(51) Int. Cl.: G06F 3/048

(54) **Data control method using mouse functions in a wireless terminal**

(30) Priority: 26.09.2005 KR 20050089307
(71) Applicant: Samsung Electronics Co., Ltd., Suwon-si, Gyeonggi-Do (KR)
(72) Inventor: Lee, Byeong-Kuk, Yeongtong-gu, Suwon-si, Gyeonggi-do (KR)
(74) Representative: Lang, Johannes

(57) **Abstract**

Provided is a data control method in a wireless terminal which can perform various control functions, such as selection, input, and edition of data, using a mouse function provided in the wireless terminal. The data control method includes selecting and dragging any character or numeral from a plurality of characters or numerals displayed on the wireless terminal by a mouse pointer, and performing a function of editing the character or numeral selected and dragged by the mouse pointer if any character or numeral is selected and dragged. Also, the data control method using a mouse function in a wireless terminal includes displaying a character or numeral keyboard on a display of the wireless terminal, selecting any character or numeral on the displayed character or numeral keyboard by a mouse pointer, and displaying the selected character or numeral by the mouse pointer.

## Description

### BACKGROUND OF THE INVENTION

### Field of the Invention:

The present invention relates to a method for controlling data using a mouse function with a wireless terminal. More particularly the present invention relates to a data control method for a wireless terminal which can perform various control functions, such as selection, input, and editing of data, using a mouse function provided with the wireless terminal.

### Description of the Related Art:

A wireless terminal provides communication services as well as other supplementary services that are associated with the use of input keys on the wireless terminal. Specifically, by manipulating the keys provided on the wireless terminal, a user of the wireless terminal is able to make a phone call, input and transfer a text message, and store and call up an image. However, the usability of fixed input keys for supplementary services is limited.

Accordingly, there is a need for an improved wireless terminal having an input means that can be used for communication services and supplementary services.

### SUMMARY OF THE INVENTION

Exemplary embodiments of the present invention address at least the above problems and/or disadvantages and provide at least the advantages described below. Accordingly, an aspect of the present invention is to provide a data control method in a wireless terminal which can perform various control functions, such as selection, input, and edition of data, using a mouse function provided in the wireless terminal.

In order to accomplish the above object, there is provided a data control method using a mouse function in a wireless terminal, according to an exemplary embodiment of the present invention, which comprises the steps of selecting and dragging any character or numeral from a plurality of characters or numerals displayed on the wireless terminal by a mouse pointer; and performing a function of editing the character or numeral selected and dragged by the mouse pointer if any character or numeral is selected and dragged.

In another aspect of an exemplary embodiment of the present invention, there is provided a data control method using a mouse function in a wireless terminal, which comprises the steps of displaying a character or numeral keyboard on a display of the wireless terminal; selecting any character or numeral on the displayed character or numeral keyboard by a mouse pointer; and displaying the selected character or numeral by the mouse pointer.

In still another aspect of an exemplary embodiment of the present invention, there is provided a data control method using a mouse function in a wireless terminal, which comprises the steps of selecting a specified region from an image displayed on the wireless terminal by a mouse pointer; and performing a function of editing the selected region of the image if the specified region is selected from the image.

In still another aspect of an exemplary embodiment of the present invention, there is provided a data control method of an external device using a mouse function of a wireless terminal, which comprises the steps of switching the mouse pointer of the wireless terminal into an external device mouse mode to control data of the external device if the wireless terminal is communicably coupled to the external device; and controlling the data of the external device according to operation of the mouse pointer of the wireless terminal in the external device mouse mode.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features, and advantages of certain embodiments of the present invention will be more apparent from the following description taken in conjunction with the accompanying drawings, in which:
FIG. 1 is a block diagram illustrating the construction of a wireless terminal according to an exemplary embodiment of the present invention;
FIG. 2 is a flowchart illustrating a process of controlling characters/numerals in a wireless terminal using a mouse function, according to a first exemplary embodiment of the present invention; and
FIG. 3 is a flowchart illustrating a process of controlling an image in a wireless terminal using a mouse function, according to a second exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

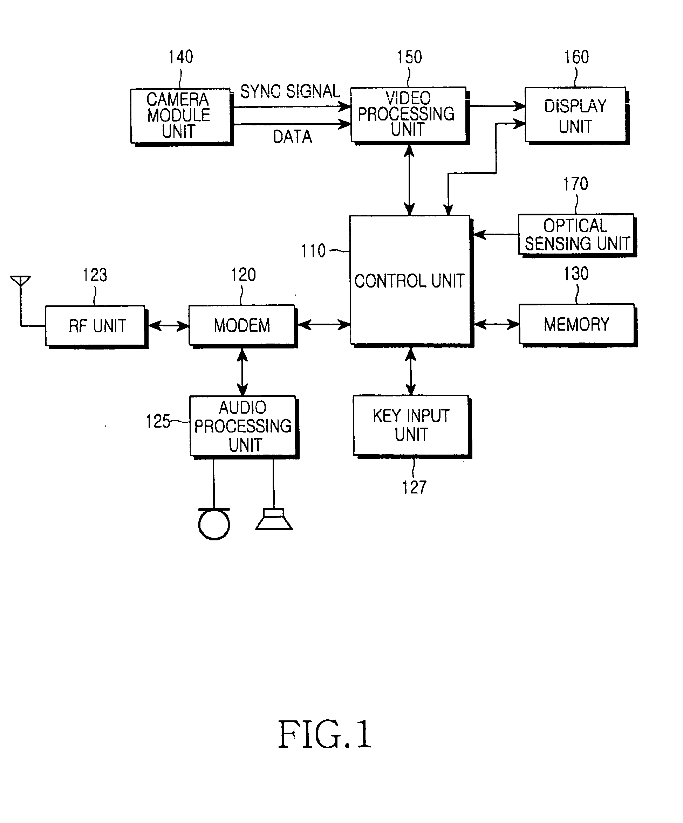

FIG. 1 is a block diagram illustrating the construction of a wireless terminal having a camera according to an exemplary embodiment of the present invention.

Referring to FIG. 1, an RF unit 123 performs a wireless communication function of the wireless terminal. The RF unit 123 includes an RF transmitter for up-converting the frequency and amplifying a signal to be transmitted and an RF receiver for low-noise-amplifying and down-converting the frequency of a received signal. A modem 120 includes a transmitter for encoding and modulating the signal to be transmitted and a receiver for demodulating and decoding the received signal. An audio processing unit 125 may comprise a codec, and the codec includes a data codec for processing packet data and an audio codec for processing an audio signal such as voice. The audio processing unit 125 converts the digital audio signal received from the modem 120 into an analog signal, using the audio codec, to reproduce the converted signal. Also, the audio processing unit 125 converts the analog audio signal transmitted from a microphone into a digital audio signal, using the audio codec, to send the converted signal to the modem 120. The codec may be separately provided or included with control unit 110.

A memory 130 may consist of a program memory and data memories. The program memory may store programs for controlling general operation of the wireless terminal and programs for controlling data using a mouse function of the wireless terminal, according to an exemplary embodiment of the present invention. Also, the data memory serves the function of temporarily storing data produced when the programs are operating.

The control unit 110 may comprise all of the functions for operation of the wireless terminal. Also, the control unit 110 may comprise the modem 120 and the codec.

Further, the control unit 110 controls a mouse pointer to be displayed on a display unit 160 in response to a signal outputted from an optical sensing unit 170, to perform a mouse function, according to an exemplary embodiment of the present invention. Also, the control unit 110 displays a keyboard of characters/numerals on the display unit 160, and displays the character/numeral selected from the keyboard of the characters/numbers using the mouse pointer, according to a first exemplary embodiment of the present invention.

If some of characters/numerals displayed on the display unit 160 are dragged and selected by the mouse pointer according to the first exemplary embodiment of the present invention, the control unit 110 performs an editing function, such as copy/paste, and delete/correct/add, so that the selected character/numeral is edited by the mouse pointer.

If numerals of the characters/numerals are selected by the mouse pointer according to the first exemplary embodiment of the present invention, the control unit 110 performs any one of call connection, phone-book mode switchover, and message mode switchover.

Also, if a specified region of a displayed image is selected by the mouse pointer according to a second exemplary embodiment of the present invention, the control unit 110 performs an editing function, such as copy/paste, zoom in/out, and region shift, so that the region of the image is edited by the mouse pointer.

Also, if the wireless terminal is connected to an external device via a local radio communication, according to an exemplary embodiment of the present invention, the control unit 110 operates such that the mouse pointer of the wireless terminal controls the data of the external device via radio communication.

The optical sensing unit 170 controls the mouse pointer displayed on the display of the wireless terminal to perform an intended function. The optical sensing unit 170 transmits the output signal, corresponding to the input of the user, to the control unit 110 in order to control the function of the mouse pointer displayed on the display 160. According to an exemplary embodiment of the present invention, the optical sensing unit 170 may perform the function of a key input unit 127.

A camera module unit 140 includes a camera sensor for taking optical information and converting the optical information into an electric signal, and a signal processing unit for converting the analog video signal obtained by the camera sensor into digital data. The camera sensor may be a CCD sensor, and the signal processing unit may be embodied by a digital signal processor (DSP). Also, the camera sensor and the signal processing unit may be integrated into one unit, or may be separated.

A video processing unit 150 produces video data for displaying the video signal outputted from the camera module unit 140. The video processing unit 150 processes the video signal outputted from the camera module unit 140 in frame units, and outputs the frame video data according to the characteristics and size of the display unit 160. Also, the video processing unit 150 includes a video codec, in order to compress the frame video data displayed on the display unit 160 in a given manner, or restores the compressed frame video data into original frame video data. The video codec may comprise a JPEG codec, MPEG4 codec, Wavelet codec, or any other type of codec that is usable for image compression. The video processing unit 150 may comprise an on-screen display (OSD) function to output OSD data in accordance with a screen size to be displayed under the control of the control unit 110.

The display unit 160 displays the video signal outputted from the video processing unit 150 onto the screen, and displays the user data outputted from the control unit 110. If the display unit 160 employs an LCD, the display unit 160 may include an LCD controller, a memory for storing the video data, and an LCD display device. The LCD may be a touch screen LCD, thereby additionally functioning as an input. Also, the display unit 160 may display keys for inputting characters and numerals to be selected by the mouse pointer, and function keys for setting various functions, according to an exemplary embodiment of the present invention. The key input unit 127 includes keys for inputting character and numeral information, and function keys for setting various functions.

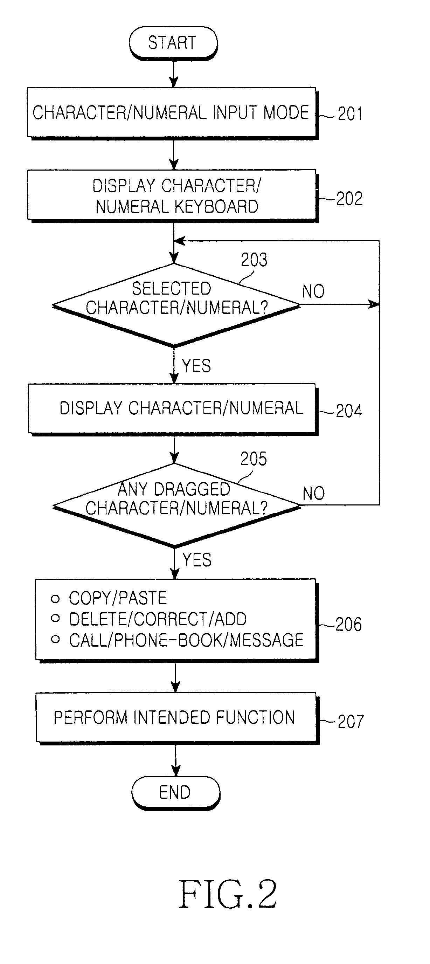

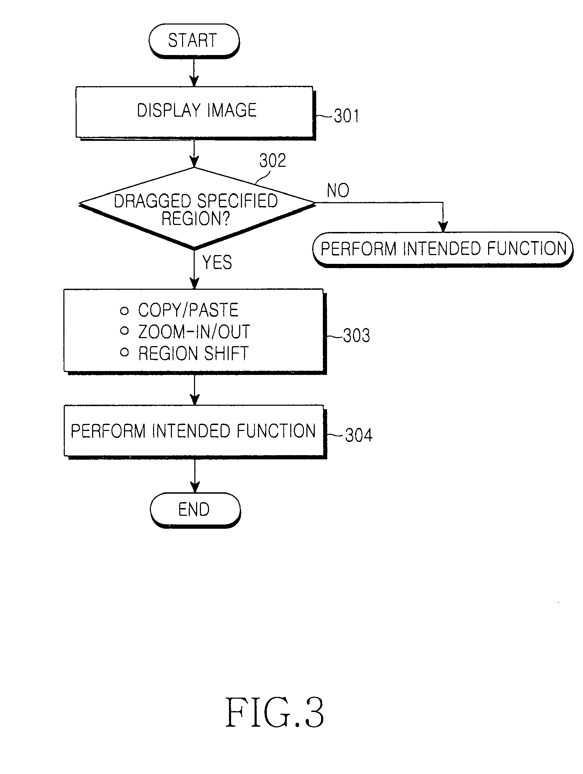

The operation of controlling data using the mouse function in the wireless terminal will now be described in detail with reference to FIGs. 2 and 3.

FIG. 2 is a flowchart illustrating the process of controlling characters/numerals in the wireless terminal using the mouse function, according to a first exemplary embodiment of the present invention.

The first exemplary embodiment of the present invention will now be described in detail with reference to FIG 1.

Referring to FIG. 2, if character/numeral input is selected in the wireless terminal, the control unit 110 detects the selection, and proceeds to step 201 to shift the wireless terminal into a character/numeral input mode. If a keyboard display of characters/numerals is selected in the character/numeral input mode, the control unit 110 detects the selection of the keyboard display, and proceeds to step 202 to display an input window showing characters/numerals to be input to the display 160 and a keyboard display window for showing the keyboard comprising characters/numerals. The keyboard display window may be set as default to be automatically displayed when the wireless terminal enters the character/numeral input mode.

If the user of the wireless terminal touches and moves the optical sensing unit 170 provided in the wireless terminal to select any character/numeral on the keyboard display window, the optical sensing unit 170 outputs the corresponding output signal to the control unit 110. The control unit 110 receiving the signal outputted from the optical sensing unit 170 detects the selection, and positions the mouse pointer displayed on the display 160 onto the corresponding character/numeral. After the mouse pointer is positioned on the corresponding character/numeral and the corresponding character/numeral is selected by the user, the control unit 110 detects the selection in step 203, and proceeds to step 204 to display the character/numeral selected by the mouse pointer on the input window of the display. The selection of the character/numeral using the mouse pointer may be accomplished through the key input unit 127 of the wireless terminal, or through the selection of the function key included in the keyboard display window.

If any character/numeral is dragged and selected by touching and moving the optical sensing unit 170 in steps 202 through 204, the control unit 110 detects the selection in step 205, and highlights the selected character/numeral. If the character/numeral is dragged and selected by the mouse pointer, the control unit 110 additionally displays the editing function keys on the keyboard display window on the display 160.

If the copy/paste among the editing function keys is selected, the control unit 110 detects the selection in step 206, and proceeds to step 207 to copy the character/numeral and paste the copied character/numeral on the position designated by the mouse pointer on the input window.

If any of the delete/correct/add editing function keys are selected, the control unit 110 detects the selection in step 206, and proceeds to step 207 to delete, correct, and/or add the character/numeral selected by the dragging of the mouse pointer. In this case, the characters/numerals displayed on the input window may be rearranged after any of the delete/correct/add functions for the character/numeral is performed.

If the numeral is selected by a dragging of the mouse pointer in step 205, keys for call connection, phone-book mode switchover, and/or message mode switchover may be displayed in addition to the editing function key. When the numerals are selected by the dragging of the mouse pointer, if the key for the call connection is selected by the mouse pointer, the control unit 110 detects the selection in step 206, and proceeds to step 207 to make a phone call using the selected numerals.

If the key for the phone-book switchover is selected by the mouse pointer, the control unit 110 detects the selection in step 206, and proceeds to step 207 to switch over to a phone-book mode for storing the selected numerals.

If the key for the message mode switchover is selected by the mouse pointer, the control unit 110 detects the selection in step 206, and proceeds to step 207 to switch over to a message mode for identifying the selected numerals as a dialing number.

FIG. 3 is a flowchart illustrating a process of controlling an image in the wireless terminal using the mouse function, according to a second exemplary embodiment of the present invention.

The second exemplary embodiment of the present invention will now be described in detail with reference to FIG 1.

Referring to FIG. 3, if the user of the wireless terminal touches and moves the optical sensing unit 170 provided in the wireless terminal to select a specified region of the image displayed on the wireless terminal, in step 301, the optical sensing unit 170 outputs the corresponding output signal to the control unit 110. The control unit 110 receives the signal outputted from the optical sensing unit 170, and displays the image of a specified region, which is selected by a dragging of the mouse pointer displayed on the display 160, as a selection box.

If the image of a specified region is selected from the displayed image in step 301, the control unit 110 detects the selection in step 302, and displays the function keys for editing the image on the display 160.

If a copy/paste is selected from the editing function keys, the control unit 110 detects the selection in step 303, and proceeds to step 304 to copy the image of a specified region and paste the copied image of the specified region onto the position designated by the mouse pointer.

If a zoom-in/out is selected from the editing function keys, the control unit 110 detects the selection in step 303, and proceeds to step 304 to zoom in or out the image of a specified region whenever the zoom-in/out key is input.

If a region shift is selected from the editing function keys, the control unit 110 detects the selection in step 303, and proceeds to step 304 to shift the selection box displaying the image of a specified region along with the movement of the mouse pointer to select and display an image of other region.

If the processes described and shown in FIGs. 2 and 3 are executed by the key input unit 127 and the optical sensing unit 170, the input and editing processes of the characters/numerals may be simultaneously executed, and the image editing process may be easily executed.

According to an exemplary embodiment of the present invention, the wireless terminal is connected to an external device via a local radio communication, so that the data of the external device is controlled by the mouse pointer of the wireless terminal.

For the data control operation of the external device using the mouse pointer of the wireless terminal, if the wireless terminal and the external device are wire-lessly connected to each other via a radio communication module, a menu to be operated via the radio communication with the external device is shown on the display 160 of the wireless terminal. If a mouse function of the external device is selected from the menu to be operated via the radio communication with the external device, the control unit 110 detects the selection, and switches the wireless terminal into a mouse mode of the external device. In this case, the control unit of the external device detects the switchover through the radio communication, and switches the external device into a mode which can be controlled by the mouse pointer of the wireless terminal.

In the mode which the data of the external device can be controlled using the mouse pointer of the wireless terminal, if the mouse pointer of the wireless terminal is operated to perform the intended operation for the data displayed on the external device, the control unit 110 detects the operation, and transfers the operation information of the mouse pointer to the external device.

If the control unit of the external device receives the operation information of the mouse pointer from the wireless terminal, it controls so that the external device carries out the operation corresponding to the data displayed on the external device in response to the operation information.

As described above, the exemplary embodiments of the invention provide a data control method for a wireless terminal using a mouse function, so that various control functions such as selection, input, and/or edition of data may be performed by the mouse function provided in the wireless terminal.

While the invention has been shown and described with reference to certain embodiments thereof, it will be understood by those skilled in the art that various changes in form and details may be made therein without departing from the spirit and scope of the invention as defined by the appended claims.

## Claims

1. A data control method using a mouse function in a wireless terminal, comprising the steps of:
selecting and dragging any character or numeral from a plurality of characters or numerals displayed on the wireless terminal by a mouse pointer; and
performing a function of editing the character or numeral selected and dragged by the mouse pointer if any character or numeral is selected and dragged.

2. The data control method as claimed in claim 1, further comprising performing either a call connection, phone-book switchover, or message mode switchover, if a numeral is selected and dragged.

3. The data control method as claimed in claim 1, wherein the editing function of the character or numeral comprises at least one of copy, paste, delete, correct and add.

4. A data control method using a mouse function in a wireless terminal, comprising the steps of:
displaying a character or numeral keyboard on a display of the wireless terminal;
selecting any character or numeral on the displayed character or numeral keyboard by a mouse pointer; and
displaying the selected character or numeral by the mouse pointer.

5. A data control method using a mouse function in a wireless terminal, comprising the steps of:
selecting a specified region from an image displayed on the wireless terminal by a mouse pointer; and
performing a function of editing the selected region of the image if the specified region is selected from the image.

6. The data control method as claimed in claim 5, wherein the function of editing the specified region of the image comprises at least one of copy, paste, zoom-in, zoom-out and region shift.

7. A data control method of an external device using a mouse function of a wireless terminal, comprising the steps of:
switching the mouse pointer of the wireless terminal into an external device mouse mode to control data of the external device, if the wireless terminal is communicably coupled to the external device; and
controlling the data of the external device according to operation of the mouse pointer of the wireless terminal in the external device mouse mode.

8. The data control method as claimed in claim 7, wherein the wireless terminal is communicably coupled to the external device via wireless communication.
